# EUROPEAN PATENT SPECIFICATION

(11) **EP 3 130 482 B1**
(45) Date of publication and mention of the grant of the patent: **01.05.2019**
(21) Application number: 15798797.5
(22) Date of filing: 28.05.2015
(51) Int. Cl.: B60C 11/12, B60C 3/04, B60C 11/00, B60C 11/03, B60C 11/04, B60C 17/00

(54) **PNEUMATIC RADIAL TIRE FOR USE ON PASSENGER VEHICLE**
RADIALLUFTREIFEN ZUR VERWENDUNG AN EINEM PASSAGIERFAHRZEUG
PNEUMATIQUE À CARCASSE RADIALE DESTINÉ A ÊTRE UTILISÉ SUR UN VÉHICULE DE TOURISME

(30) Priority: 30.05.2014 JP 2014113480
(43) Date of publication of application: 15.02.2017
(73) Proprietor: Bridgestone Corporation, Tokyo 104-8340 (JP)
(72) Inventor: HATANAKA, Shintaro, Tokyo 104-8340 (JP); KUWAYAMA, Isao, Tokyo 104-8340 (JP)
(74) Representative: Oxley, Robin John George
(86) International application number: PCT/JP2015/002711
(87) International publication number: WO 2015/182153

(56) References cited:
- EP-A1- 3 115 227
- EP-A2- 1 731 332
- WO-A1-2013/014950
- WO-A1-2013/065319
- WO-A1-2015/182151
- JP-A- H09 227 720
- JP-A- 2004 009 999
- JP-A- 2005 263 175
- JP-A- 2006 224 770
- JP-A- 2008 143 485
- JP-A- 2009 202 772

## Description

### TECHNICAL FIELD

The disclosure relates to a passenger-vehicle pneumatic radial tire.

### BACKGROUND

Since conventional vehicles built up to around 1960 were lightweight and the cruising speed required for vehicles was slower, the load on tires was smaller. Therefore, bias tires with a smaller tire section width were used. At present, however, as vehicles have become heavier and faster, tires have been made to have a radial structure and a larger width (e.g. JPH0740706A (PTL 1)).

However, an increase in tire section width compresses vehicle space and reduces ride comfort inside the vehicle. Further, due to the increase in air resistance, fuel efficiency is deteriorated.

In recent years, the demand for higher fuel efficiency is becoming more severe due to the growing interest in environmental issues. The high fuel efficiency is evaluated by rolling resistance (RR), and it is known that a lower rolling resistance results in higher fuel efficiency.

In order to reduce the tire rolling resistance coefficient (RRC) to improve high fuel efficiency, it is known that increasing the diameter and width of the tire is effective. However, increasing the diameter and width of the tire causes an increase in tire weight and air resistance, and therefore results in an increase in vehicle resistance, and further, the load capacity of the tire becomes excessive.

To address this problem, we have proposed a technique regarding a pneumatic radial tire for passenger vehicles in which the internal pressure and sectional width (SW) of the tire and the outer diameter (OD) of the tire satisfy a certain relation, in other words, a pneumatic radial tire for passenger vehicles with a narrow-width (narrow tire width) and a large-diameter (large tire outer diameter) (e.g. WO2012176476 (PTL 2)).

### CITATION LIST

### Patent Literature

PTL 1: JPH0740706A
PTL 2: WO2012176476
   WO 2013/014950 discloses a tire according to the pre-characterising portion of claim 1
   JP 2008-143485 and JP 2004-009999 disclose further known tires

### SUMMARY

### (Technical Problem)

Meanwhile, with such narrow-width, large-diameter radial tire, there was still room for consideration in wet performance which is an index regarding braking performance on a wet road surface. Therefore, we have been carrying out studies for improving wet performance by adjusting the dynamic storage modulus E' of the tread rubber at 30 °C of the radial tire, and have found that, by adjusting the dynamic storage modulus E' in a predetermined range, wet performance can be improved. However, even in cases in which the dynamic storage modulus E' is adjusted in a predetermined range, a further improvement in wet performance and rolling resistance performance has been required.

It could therefore be helpful to provide a narrow-width, large-diameter radial tire which is a passenger-vehicle pneumatic radial tire with improved wet performance and rolling resistance performance.

### (Solution to Problem)

The passenger-vehicle pneumatic radial tire of the disclosure is a passenger-vehicle pneumatic radial tire comprising:
a carcass consisting of one or more carcass plies of radially arranged cords toroidally extending between a pair of bead portions; and
a tread rubber disposed on a tire radial outer side of the carcass, wherein
when the tire is assembled to a rim and filled with an internal pressure of 250 kPa or more,
an SW/OD ratio of a sectional width SW to an outer diameter OD (mm) of the tire is 0.26 or less if the tire has the sectional width SW of less than 165 (mm), whereas
the sectional width SW and the outer diameter OD (mm) of the tire satisfy a relation of 2.135 × SW + 282.3 ≤ OD if the tire has the sectional width SW of 165 (mm) or more,
the tread rubber has a dynamic storage modulus E' at 30 °C of 6.0 MPa to 12.0 MPa and a loss tangent tanδ at 60 °C of 0.05 to 0.15, and
   when a tread surface is equally divided into four regions in a tire width direction, and two regions on a tire widthwise inner side are each referred to as a center portion and two regions on a tire widthwise outer side are each referred to as a shoulder portion, a shoulder circumferential sipe extending in a tire circumferential direction is disposed in the shoulder portion.
The shoulder portion is equally divided into three regions in the tire width direction. The shoulder circumferential sipe is disposed only in a center region of the three regions of the shoulder portion.

With this structure, it is possible to further improve wet performance and rolling resistance performance while ensuring cornering power upon cornering.

According to the disclosure, it is possible to improve the wet performance and rolling resistance performance of a narrow-width, large-diameter radial tire.

In the disclosure, the sectional width SW and the outer diameter OD of the tire are the sectional width and outer diameter prescribed by JIS D 4202-1994 when the tire is assembled to a rim, filled with an internal pressure of 250 kPa or more and no load is applied thereon.

The aforementioned "rim" refers to a standard rim in an applicable size (such as Measuring Rim in STANDARDS MANUAL of ETRTO, Design Rim in YEAR BOOK of TRA) recited in industrial standards effective in a region where the tire is manufactured and used, for example, JATMA YEAR BOOK published or will be published in the future by the Japan Automobile Tire Manufacturers Association, Inc. (JATMA) in Japan, in STANDARDS MANUAL of the European Tire and Rim Technological Organization (ETRTO) in Europe, and in YEAR BOOK of the Tire and Rim Association, Inc. (TRA) in the US (in other words, the aforementioned "rim" includes those of the sizes currently included and the sizes which may be included in the above industrial standards in the future. Examples of "sizes indicated in the future" are sizes described as "FUTURE DEVELOPMENTS" in ETRTO 2013). In cases of sizes not indicated in the above industrial standards, "rim" refers to a rim with width corresponding to the bead width of the tire.

In the disclosure, the dynamic storage modulus E' (MPa) and loss tangent tanδ (ratio (E"/E') of dynamic loss elastic modulus (E") to dynamic storage modulus (E')) are related to vulcanized rubber, and are values obtained by applying an initial load of 160 g on a test piece of thickness: 2 mm; width: 5 mm; and length: 20 mm, and carrying out measurement under the conditions of initial strain: 1 %; and frequency: 50 Hz. The dynamic storage modulus E' is, unless otherwise specified, the value measured at a temperature of 30 °C (hereinafter, the dynamic storage modulus E' at 30 °C will also be referred to simply as "E"') and the loss tangent tanδ is, unless otherwise specified, the value measured at a temperature of 60 °C (hereinafter, the loss tangent tanδ at 60 °C will also be referred to simply as "tanδ").

In the disclosure, tread rubber refers to rubber containing no members such as a belt which is optionally included in the tread portion.

In the disclosure, the tread surface refers to the outer circumferential surface of the whole tire, which comes into contact with the road surface when the tire assembled to the above rim and filled with an internal pressure of 250 kPa or more is rolled in the state of being applied with a load of 75 % of the maximum load capability. Therefore, in the disclosure, "equally dividing a tread surface into four regions in the tire width direction" means to equally divide the tread surface from one end (ground contact end) of the tire width direction of the tread surface to the other end (ground contact end) of the tire width direction into four.

In the disclosure, the shoulder circumferential sipe and the center circumferential sipe described below refer to sipes extending in the tire circumferential direction. Further, these sipes are allowed to be inclined to the tire circumferential direction by 0 ° or more and 10 ° or less.

As used herein, "phr" refers to the content (parts by mass) of each component with respect to 100 parts by mass of the rubber component.

The shoulder portion is equally divided into three regions in the tire width direction. The shoulder circumferential sipe is disposed only in a center region of the three regions of the shoulder portion.

With this structure, it is possible to further improve wet performance and rolling resistance performance while ensuring cornering power upon cornering.

Further, in the passenger-vehicle pneumatic radial tire of the disclosure, the shoulder circumferential sipe preferably has a depth ts from a tread surface of 4 mm or more.

With this structure, it is possible to further improve the rolling resistance performance.

Further, in the passenger-vehicle pneumatic radial tire of the disclosure, a total length of the shoulder circumferential sipe in one of the shoulder portions, measured over an entire circumference of the tire along the tire circumferential direction, is preferably 50 % or more, and more preferably 80 % to 100 %, of a length of the tire, measured over the entire circumference of the tire along the tire circumferential direction at a tire widthwise position, where the shoulder circumferential sipe is disposed.

With this structure, it is possible to effectively improve the rolling resistance performance.

Further, in the passenger-vehicle pneumatic radial tire of the disclosure, it is preferable that,
at least two circumferential main grooves continuously extending in the tire circumferential direction are provided in the tread surface,
a center land portion defined by the two circumferential main grooves is formed in the center portion, and
when the center land portion is equally divided into three regions in the tire width direction, two or less rows of center circumferential sipes with a depth tc from a tread surface of 3 mm or less are disposed in a center region of the three regions of the center land portion.

With this structure, it is possible to effectively improve the wet performance.

In the disclosure, a situation where a plurality of sipes separately disposed in the tire circumferential direction are disposed to be one row and a situation where one sipe that is continuous in the tire circumferential direction is disposed to be one row are both referred to as "one row of a sipe".

Further, in the passenger-vehicle pneumatic radial tire of the disclosure, it is preferable that,
two of the center circumferential sipes are continuously extending side by side in the tire circumferential direction in the center land portion, and
a width W₁ of the center land portion in the tire width direction and a width W₂ of a land portion in the tire width direction located between two of the center circumferential sipes satisfy a relation of:
√(2tc) < w₂ < w₁/4.

With this structure, it is possible to sufficiently improve the wet performance.

Here, another disclosed example of a passenger-vehicle pneumatic radial tire of the disclosure is a passenger-vehicle pneumatic radial tire comprising:
a carcass consisting of one or more carcass plies of radially arranged cords toroidally extending between a pair of bead portions; and
a tread rubber disposed on a tire radial outer side of the carcass, wherein
when the tire is assembled to a rim and filled with an internal pressure of 250 kPa or more,
an SW/OD ratio of a sectional width SW to an outer diameter OD (mm) of the tire is 0.26 or less if the tire has the sectional width SW of less than 165 (mm), whereas
the sectional width SW and the outer diameter OD (mm) of the tire satisfy a relation of 2.135 × SW + 282.3 ≤ OD if the tire has the sectional width SW of 165 (mm) or more,
the tread rubber has a dynamic storage modulus E' at 30 °C of 6.0 MPa to 12.0 MPa and a loss tangent tanδ at 60 °C of 0.05 to 0.15, and
when a tread surface is equally divided into four regions in a tire width direction, and two regions on a tire widthwise inner side are each referred to as a center portion and two regions on a tire widthwise outer side are each referred to as a shoulder portion,
   at least two circumferential main grooves continuously extending in a tire circumferential direction are disposed on the tread surface,
   a center land portion defined by two of the circumferential main grooves is formed in the center portion, and
   when the center land portion is equally divided into three regions in the tire width direction, a second center circumferential sipe is disposed in a center region of the three regions of the center land portion.

According to the disclosure, it is possible to improve the wet performance and the rolling resistance performance of a narrow-width, large-diameter radial tire.

### (Advantageous Effect)

According to the disclosure, it is possible to provide a narrow-width, large-diameter radial tire which is a passenger-vehicle pneumatic radial tire with improved wet performance and rolling resistance performance.

### BRIEF DESCRIPTION OF THE DRAWINGS

In the accompanying drawings:
FIG. 1 is a tire widthwise cross sectional view illustrating the pneumatic radial tire for passenger vehicles according to the first embodiment of the invention;
FIG. 2A is a tire widthwise cross sectional view illustrating the tread portion of the tire illustrated in FIG. 1 in enlarged scale, and FIG. 2B is a developed view illustrating a part of the tread pattern of the tire illustrated in FIG. 1;
FIG. 3 is a developed view illustrating a part of the tread pattern of the pneumatic radial tire for passenger vehicles according to an
   example means in the present application not according to an embodiment of the invention as claimed
FIG. 4A is for explaining the wet performance of a wide-width radial tire, and FIG. 4B is for explaining the wet performance of a narrow-width radial tire;
FIG. 5 is a tire widthwise schematic cross sectional view of a tire widthwise half portion of the pneumatic radial tire for passenger vehicles;
FIG. 6 is a schematic plan view illustrating the first example of a belt structure;
FIG. 7 is a schematic plan view illustrating the second example of a belt structure;
FIG. 8 is a schematic plan view illustrating the third example of a belt structure;
FIG. 9 is a tire widthwise schematic cross sectional view of a tire widthwise half portion of the pneumatic radial tire for passenger vehicles according to the fourth embodiment of the disclosure; and
FIG. 10 is a tire widthwise schematic partial cross sectional view of a tire widthwise half portion of the pneumatic radial tire for passenger vehicles according to the fifth embodiment of the disclosure.

### DETAILED DESCRIPTION

Hereinafter, with reference to the drawings, the pneumatic radial tire 1 for passenger vehicles (or passenger-vehicle pneumatic radial tire) according to the embodiment of the disclosure (hereinafter, also simply referred to as "tire") will be described in detail. The following descriptions and drawings are an example for describing the tire 1 of the disclosure, and the disclosure is not intended to be limited in any way by the descriptions and illustrated forms.

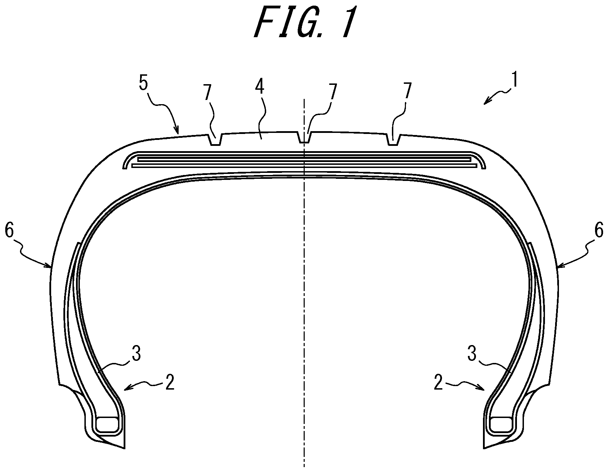

The tire 1 of the disclosure is, for example, as illustrated in the tire widthwise cross sectional view of FIG. 1, provided with at least a carcass 3 consisting of one or more carcass plies of radially arranged cords toroidally extending between a pair of bead portions 2, and a tread rubber 4 disposed on the tire radial outer side of the carcass 3.

More specifically, the tire 1 of the disclosure is provided with a tread portion 5, a pair of sidewall portions 6 continuously extending in the lateral face of the tread portion 5 toward the tire radial inner side, bead portions 2 continuously extending from each sidewall portion 6 toward the inner ends in the tire radial direction, and a carcass 3 consisting of one or more carcass plies, toroidally extending from one bead portion 2 to the other bead portion 2 to reinforce each of the above portions. In the bead portions 2, bead cores are embedded. Further, as reinforcement members for the above bead portions 2, rubber chafers are provided on the outer side surfaces of the bead portions 2, and a belt consisting of one or more belt plies is provided on the crown portion of the carcass 3. Further, the tread rubber 4 is disposed on the tire radial outer side of the crown portion of the carcass 3.

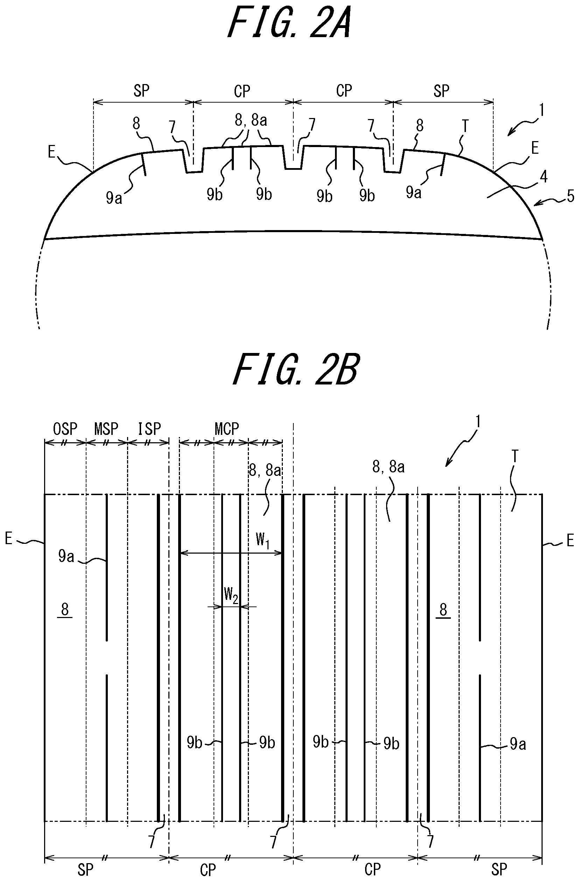

In the embodiment illustrated in FIG. 2, at least two circumferential main grooves 7 continuously extending in the tire circumferential direction are disposed on the tread surface T. In the illustrated example, three circumferential main grooves 7 continuously extending linearly in the developed view along the tire circumferential direction are disposed, and four rib-like land portions 8 are formed on the tread surface T by the circumferential main grooves 7. In the disclosure, the circumferential main grooves 7 are not a requisite feature.

With this tire 1, in a state where the tire 1 is assembled to a rim, filled with an internal pressure of 250 kPa or more and no load is applied thereon, an SW/OD ratio of the sectional width SW to the outer diameter OD (mm) of the tire 1 is 0.26 or less if the tire 1 has a sectional width SW of less than 165 (mm), whereas the sectional width SW and the outer diameter OD (mm) of the tire 1 satisfy a relation of 2.135 × SW + 282.3 ≤ OD (hereinafter also referred to as "satisfy relation (1)") if the tire 1 has a sectional width SW of 165 (mm) or more. Because the above relation is satisfied, the tire 1 has a narrow-width, large-diameter shape, and therefore the rolling resistance performance of the tire 1 is improved (rolling resistance is decreased) and the weight of the tire 1 is reduced.

Further, the internal pressure of the tire is preferably 250 kPa or more, and more preferably 250 kPa to 350 kPa. This is because, while a tire satisfying the above relation (1) tends to have an increased ground contact length, setting the internal pressure of the tire to be 250 kPa or more suppresses the increase in ground contact length, reduces the deformation of the tread rubber, and further reduces rolling resistance.

Further, from the viewpoint of reducing tire rolling resistance and reducing tire weight, it is preferable that the sectional width SW and the outer diameter OD of the tire satisfy a relation of -0.0187 × SW² + 9.15 × SW - 380 ≤ OD (hereinafter also referred to as relation (2)) if the internal pressure of the tire is 250 kPa or more.

For this tire 1, the dynamic storage modulus E' at 30 °C of the tread rubber 4 is 6.0 MPa to 12.0 MPa. In a narrow-width, large-diameter radial tire 1, setting the dynamic storage modulus E' of the tread rubber 4 to the above specific range improves the friction coefficient µ in a wet condition, and therefore improves wet performance. Further, adopting the above dynamic storage modulus E' improves the cornering power upon cornering and improves the steering stability. From the same viewpoint, the dynamic storage modulus E' is preferably 7.9 MPa to 12.0 MPa, and more preferably 8.0 MPa to 11.0 MPa.

Further, the loss tangent tanδ at 60 °C of the tread rubber 4 is 0.05 to 0.15. This way, the rolling resistance performance can be improved.

The tread rubber 4 can be formed by kneading and vulcanizing, in accordance with an ordinary method, a rubber composition optionally containing, in addition to conventionally known rubber components, a conventionally known filler, age resistor, vulcanizing agent, vulcanization accelerator, processing oil, anti-scorch agent, zinc oxide, stearic acid and the like.

Conditions for kneading are not particularly limited, and using a Banbury mixer, roll kneader, internal mixer and the like, the rotor rotation speed, ram pressure, kneading temperature, and kneading time may be adjusted as appropriate depending on the formulation, the volume charged into the kneading apparatus and the like.

Further, as conditions for vulcanizing the rubber composition, the vulcanizing temperature may be, for example, 100 °C to 190 °C. The vulcanization time may be, for example, 5 minutes to 80 minutes.

Examples of rubber components of the tread rubber 4 include, for example, modified or unmodified synthetic rubber such as styrene-butadiene copolymer rubber (SBR), butadiene rubber (BR), polyisoprene rubber (IR), isobutylene isoprene rubber (IIR), halogenated butyl rubber, styrene-isoprene copolymer rubber (SIR) and chloroprene rubber (CR), and natural rubber (NR).

The method for modifying conjugated diene polymers such as SBR and BR is not particularly limited, and a conventionally known method may be applied. For example, the method described in WO2008050845 (method of allowing a modifying agent to react with active ends of conjugated diene-based polymer, and in the presence of a titanium-based condensation accelerator, performing condensation reaction involving the modifying agent) or the like may be applied.

A preferable example of a conjugated diene-based polymer is a copolymer of 1,3-butadiene and styrene.

Preferable examples of modifying agents include N,N-bis(trimethylsilyl)aminopropylmethyldimethoxysilane, N,N-bis(trimethylsilyl)aminopropylmethyldiethoxysilane, and 1-trimethylsilyl-2-ethoxy-2-methyl-l-aza-2-silacyclopentane.

Preferable examples of titanium-based condensation accelerators include tetrakis (2-ethyl-1,3-hexanediolato) titanium, tetrakis (2-ethylhexoxy) titanium, and titanium di-n-butoxide (bis-2,4-pentanedionate).

The above mentioned rubber components may be used alone or in combination of two or more.

Examples of fillers include the conventionally known carbon black, silica, calcium carbonate, talc and clay. The above mentioned fillers may be used alone or in combination of two or more.

For the tire 1 of the disclosure, it is preferable that the rubber composition forming the tread rubber 4 contains at least a rubber component and a filler, and that, in the rubber composition, the filler is contained in an amount of 50 parts by mass to 100 parts by mass with respect to 100 parts by mass of the rubber component. This way, there is an advantage of achieving excellent wear resistance and workability. From the viewpoint of wear resistance and workability, the filler is contained more preferably in an amount of 55 parts by mass to 85 parts by mass, and even more preferably in an amount of 75 parts by mass to 85 parts by mass with respect to 100 parts by mass of the rubber component. Further, it is more preferable that the filler is contained in an amount of 50 parts by mass to 90 parts by mass with respect to 100 parts by mass of the diene-based polymer (diene-based rubber).

For the tire 1 of the disclosure, it is preferable that the filler contains silica, and that the silica is contained in the amount of 25 parts by mass to 100 parts by mass with respect to 100 parts by mass of the rubber component. This way, there is an advantage of achieving excellent wet performance. Further, from the viewpoint of wet performance, silica is contained more preferably in an amount of 50 parts by mass to 75 parts by mass, and even more preferably in an amount of 60 parts by mass to 75 parts by mass with respect to 100 parts by mass of the rubber component.

When using silica as the filler, the silica may be processed using a silane coupling agent.

Meanwhile, in order to set E' to be 6.0 MPa to 12.0 MPa as described above, the composition may be appropriately varied, for example, of 100 phr of diene-based polymer, the content of modified S-SBR may be appropriately varied in a range of 20 phr to 70 phr, and of 50 phr to 80 phr of the filler, the content of silica may be appropriately varied in a range of 30 phr to 80 phr.

Further, in order to set tanδ to be 0.05 to 0.15 as described above, the composition may be appropriately varied, for example, of 100 phr of diene-based polymer, the content of NR may be appropriately varied in a range of 0 phr to 20 phr and the content of modified S-SBR may be appropriately varied in a range of 20 phr to 70 phr, and of 50 phr to 80 phr of the filler, the content of silica may be appropriately varied in a range of 30 phr to 80 phr.

Because this tire 1 is provided with the above mentioned tread rubber 4, the shearing rigidity in the tire circumferential direction (circumferential shearing rigidity) and the compression rigidity in the tire circumferential direction are increased, and therefore the wet performance and the rolling resistance performance are improved. However, a further improvement was required.

Therefore, we made intensive studies for further improving the wet performance and rolling resistance performance, and as a result, it was found that, in the portion brought into contact with the ground during the rotation of the tire 1, a shear strain in the tire widthwise inner side is caused in the tread rubber 4 of the shoulder portion SP, and therefore the rolling resistance performance was not sufficiently improved. Specifically, in a tire widthwise cross sectional view, there is a difference between the tire widthwise length of the tread surface T and the tire widthwise length of the belt of the tread portion 5, and therefore, the tread rubber 4 contacting the road surface when the tire 1 comes into contact with the ground is pulled by the belt, and a shear strain in the tire widthwise inner side was caused particularly in the tread rubber 4 of the shoulder portion SP. Further, the rolling resistance is determined by the product of the strain of the rubber and the rigidity of rubber, and due to the use of a tread rubber 4 with a high dynamic storage modulus E' and high rigidity mentioned above, the rolling resistance tended to be high. Moreover, due to the large rigidity and thus compression rigidity of the tread rubber 4, the footprint area (effective ground contacting area) of the tire 1 to the road surface was suppressed, and the wet performance was insufficient.

Meanwhile, as mentioned above, this tire 1 has improved wet performance and the like due to its high rigidity, particularly high circumferential shearing rigidity. Therefore, it was necessary to maintain the circumferential shearing rigidity.

In light of the above, for this tire 1, when, as shown in FIGS. 2A and 2B, the tread surface T is virtually equally divided into four regions in the tire width direction, and the two regions on the tire widthwise inner side are each referred to as the center portion CP and the two regions on the tire widthwise outer side are each referred to as the shoulder portion SP, shoulder circumferential sipes 9a extending in the tire circumferential direction are disposed in the shoulder portions SP. In the illustrated example, the shoulder circumferential sipe 9a is a sipe extending linearly along the tire circumferential direction in the developed view.

With this structure, by disposing the shoulder circumferential sipes 9a in the shoulder portions SP, the shearing rigidity in the tire width direction (widthwise shearing rigidity) of the tread rubber 4 of the shoulder portions SP is reduced, and therefore the rolling resistance coefficient, which is determined by the product of the strain and rigidity of the rubber, can be reduced (i.e. the rolling resistance performance can be improved). Further, since the compression rigidity of the tread rubber 4 of the shoulder portions SP can be reduced, the effective ground contacting area can be increased, and therefore the wet performance can be improved. Here, since the shoulder circumferential sipes 9a extend in the circumferential direction, the circumferential shearing rigidity can be maintained, and therefore the wet performance based on the circumferential shearing rigidity can be maintained.

Here, if the rigidity of the tread rubber 4 is reduced for the purpose of reducing the widthwise shearing rigidity of the shoulder portions SP of the tread rubber 4, the shearing rigidity in the tire circumferential direction and thus the wet performance and the like may also be reduced.

Although, in the illustrated example, the circumferential main grooves 7 are disposed on the boundaries between each of the shoulder portions SP and center portions CP, for this tire 1, it is not necessary for the boundaries and the circumferential main grooves 7 to be at the same positions. Although, in the illustrated example, the shoulder circumferential sipes 9a are disposed in the shoulder portions SP on both tire widthwise outer sides, the effect of the disclosure can be obtained even if, for example, the shoulder circumferential sipes 9a are disposed in only one of the shoulder portions SP.

Further, in this embodiment, the shoulder circumferential sipe 9a and the center circumferential sipe 9b described below refer to sipes with opening width toward the tread surface of 1.5 mm or less in a state where the tire is assembled to a rim, filled with an internal pressure of 30 kPa, which is a degree of pressure that maintains the shape of the tire 1, and no load is applied thereon.

While the shoulder circumferential sipe 9a may be disposed in any position in the tire width direction of the shoulder portion SP, it is preferable that, when the shoulder portion SP is virtually equally divided into three regions in the tire width direction, the shoulder circumferential sipe 9a is, as shown in FIG. 2B, disposed in a center region MSP of the three regions of the shoulder portion SP. If the shoulder circumferential sipe 9a is disposed in a region OSP on the tire widthwise outer side of the shoulder portion SP, the width from the shoulder circumferential sipe 9a to the ground contact end E of the tread surface T becomes narrow, and may result in, for example, insufficient cornering power at cornering. Further, as to the effect of reducing the widthwise shearing rigidity, the rolling resistance performance and wet performance can be more improved when the shoulder circumferential sipe 9a is disposed on the tire widthwise outer side of the shoulder portion SP, compared to when the shoulder circumferential sipe 9a is disposed in a region ISP on the tire widthwise inner side of the shoulder portion SP.

Although the depth ts of the shoulder circumferential sipe 9a, from the tread surface T to the bottom of the sipe 9a is not limited, it is preferably 4 mm or more. This way, the widthwise shearing rigidity of the shoulder portion SP is effectively reduced, and the rolling resistance performance is further improved. Although the upper limit of the depth ts is not limited, ts is preferably 7 mm or less from the viewpoint of production.

From the viewpoint of ensuring cornering power, it is preferable that, in one shoulder portion SP, the shoulder circumferential sipes 9a are not overlapped in the tire width direction. More specifically, when a plurality of shoulder circumferential sipes 9a are separately disposed in the shoulder portion SP in the tire width direction (in other words, when a plurality of rows of shoulder circumferential sipes 9a are disposed in the shoulder portion SP), it is preferable that each shoulder circumferential sipe 9a is separately disposed in the tire circumferential direction without overlapping in the tire width direction. Further, it is preferable that, on the shoulder portion SP, one shoulder circumferential sipe 9a, or one row of a plurality of shoulder circumferential sipes 9a separated from each other in the tire circumferential direction is disposed.

It is not necessary for the shoulder circumferential sipe 9a to be continuous over the entire circumference of the tire, or to be disposed linearly along the tire circumferential direction (i.e. the sipe 9a may be disposed in a zigzag manner). However, it is preferable that the total length of the shoulder circumferential sipe 9a in one shoulder portion SP, measured over the entire circumference of the tire along the tire circumferential direction (hereinafter also referred to as "total length of shoulder circumferential sipe"), is 50 % or more of the length of the tire, measured over the entire circumference of the tire along the tire circumferential direction at a tire widthwise position, where the shoulder circumferential sipe 9a is disposed (hereinafter also referred to as "tire circumference length"). This way, the widthwise shearing rigidity of the shoulder portion SP can be even more effectively reduced, and the rolling resistance performance can be further improved.

From the same viewpoint, it is more preferable that this ratio is 80 % to 100 %.

While, in the illustrated example, the shoulder circumferential sipes 9a are disposed in both shoulder portions SP, it is preferable for the total length of the shoulder circumferential sipe 9a disposed in each shoulder portion to be 80 % or more.

To set the total length of the shoulder circumferential sipe 9a to be 50 % or more of the circumferential length of the shoulder portion SP, only one shoulder circumferential sipe 9a continuous in the tire circumferential direction may be disposed in the shoulder portion SP. However, from the viewpoint of adjusting the widthwise shearing rigidity of the shoulder portion SP, it is preferable to arrange a plurality of shoulder circumferential sipes 9a along the tire circumferential direction with intervals therebetween in the tire circumferential direction. In such case, it is preferable that the tire circumferential length of the shoulder circumferential sipe 9a with respect to the pitch length (distance of the land portion between shoulder circumferential sipes 9a adjacent to each other in the tire circumferential direction, measured along the tire circumferential direction) remains the same over one round of the tire circumferential direction.

This way, even when a plurality of shoulder circumferential sipes 9a are intermittently disposed in the tire circumferential direction, it is possible to make the widthwise shearing rigidity of the shoulder portion SP nearly uniform in the tire circumferential direction.

From the same viewpoint, it is preferable, in this case, that 40 to 100 shoulder circumferential sipes 9a are disposed over the entire tire circumference of the shoulder portion SP having the shoulder circumferential sipes 9a disposed thereon.

As mentioned above, in this embodiment, at least two circumferential main grooves 7 continuously extending in the tire circumferential direction are disposed on the tread surface T, and center land portions 8a defined by at least two circumferential main grooves 7 are formed in the center portion CP. In the illustrated example, three circumferential main grooves 7 are disposed on the tread surface T, more specifically, on the boundary between two center portions CP and on the boundaries between each center portion CP and each shoulder portion SP, and one center land portion 8a is formed in each center portion CP.

In such case, it is preferable that, when the center land portion 8a is virtually equally divided into three regions in the tire width direction, two rows or less of center circumferential sipes 9b having depth tc, from the tread surface T to the bottom, of 3 mm or less are disposed in the center region MCP. With this structure, center circumferential sipes 9b which extend in the tire circumferential direction and have relatively shallow depth tc of 3 mm or less are disposed in the center land portions 8a defined by circumferential main grooves 7, and thus the compression rigidity of the tread rubber 4 of only the surface of the tread surface T is reduced. Therefore, the effective ground contacting area is increased, and the wet performance is further improved. Here, since the center circumferential sipe 9b has a relatively shallow depth tc of 3 mm or less, and only a small number of two rows or less is disposed, the circumferential shearing rigidity of the center portion CP is maintained, and therefore a high wet performance based on circumferential shearing rigidity is maintained.

Since the center circumferential sipe 9b is disposed in the region corresponding to the center region MCP of the three regions of the center land portion 8a equally divided in the tire width direction, the cornering power upon cornering can be sufficiently maintained compared to when the sipe 9b is disposed in a region, among the three regions, other than the center region MCP.

Although how the center circumferential sipe 9b is disposed in one center land portion 8a is not limited, it is preferable that, as shown in FIG. 2B, two center circumferential sipes 9b extend side by side, either with intervals provided in the tire circumferential direction or continuously in the tire circumferential direction (in other words, each of the two rows of the center circumferential sipes 9a is one center circumferential sipe 9b continuously extending in the tire circumferential direction). When two center circumferential sipes 9b are continuously extending side by side in the tire circumferential direction, the effect of reducing compression rigidity can be obtained in the entire area in the circumferential direction, and therefore the effective ground contacting area can be further increased.

It is not necessary for the center circumferential sipe 9b to be continuous over the entire circumference of the tire. Further, it is not necessary for the center circumferential sipe 9b to be disposed linearly along the tire circumferential direction. When the center circumferential sipes 9b are disposed intermittently in the tire circumferential direction, it is preferable that the total length of the center circumferential sipe 9b in one center land portion 8a, measured over the entire circumference of the tire along the tire circumferential direction (excluding the portion where a plurality of center circumferential sipes 9b are overlapped in the tire width direction) is 50 % or more of a length of the tire, measured over the entire circumference of the tire along the tire circumferential direction at a tire widthwise position, where the center circumferential sipe 9b is disposed. This is because, if the ratio is less than 50 %, the effect of increasing the effective ground contacting area obtained by the reduction in compression rigidity may become insufficient. From the same viewpoint, it is more preferable that the above ratio is 80 % to 100 %.

Further, in this case, it is preferable that 40 to 100 center circumferential sipes 9b are disposed in the center land portion 8a.

While the center circumferential sipes 9b may be disposed in one or both of the pair of center portions CP, it is preferable to dispose the center circumferential sipes 9b in both of the pair of center portions CP.

Further, when two center circumferential sipes 9b are continuously extending side by side in the tire circumferential direction in the center land portion 8a, it is preferable that a width w₁ of the center land portion 8a in the tire width direction, and a width w₂ of a portion of the center land portion 8a in the tire width direction located between the two center circumferential sipes 9b satisfy a relation of √(2tc) < w₂ < w₁/4. This way, the wet performance is further improved. More specifically, by setting the width w₂ of the portion of the center portion 8a located between the center circumferential sipes 9b to be more than √(2tc), it is possible to suppress the reduction of cornering power caused by the excessive reduction in widthwise shearing rigidity of the portion of the center land portion 8a located between the two center circumferential sipes 9b. Further, by setting the width w₂ to be less than w₁/4, there will be two center circumferential sipes 9b near the center of the center land portion 8b with high ground contact pressure. Thus, the compression rigidity near the center of the land portion can be effectively reduced, and therefore the effect of increasing the effective ground contacting area can be enhanced.

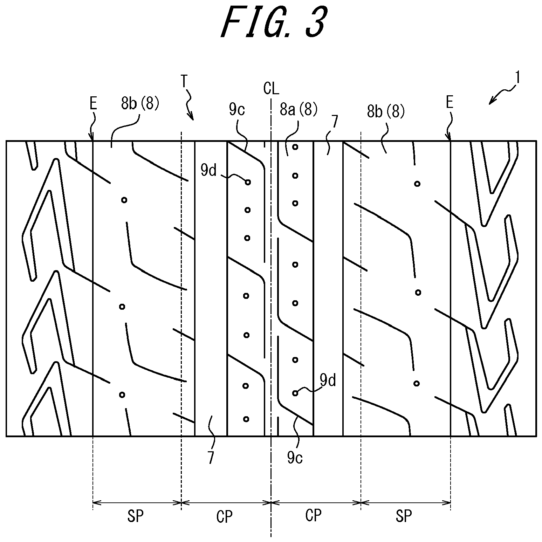

FIG. 3 is a developed view illustrating an example of a tread pattern of a pneumatic tire for passenger vehicles. As in the tire 1 according to the embodiment, the tire 1 according to the example is, for example, as illustrated in the tire widthwise cross sectional view of FIG. 1, provided with at least a carcass 3 consisting of one or more carcass plies of radially arranged cords toroidally extending between a pair of bead portions 2, and a tread rubber 4 disposed on the tire radial outer side of the carcass 3.

With the tire 1 according to the example, as in the tire 1 according to the embodiment, in a state where the tire is assembled to a rim and filled with an internal pressure of 250 kPa or more, an SW/OD ratio of the sectional width SW to the outer diameter OD (mm) of the tire is 0.26 or less if the tire has a sectional width SW of less than 165 (mm), whereas the sectional width SW and the outer diameter OD (mm) of the tire satisfy a relation of 2.135 × SW + 282.3 ≤ OD if the tire has a sectional width SW of 165 (mm) or more. Further, as in the tire according to the embodiment, the tread rubber of the tire 1 according to the example a dynamic storage modulus E' at 30 °C of 6.0 MPa to 12.0 MPa and a loss tangent tanδ at 60 °C of 0.05 to 0.15.

For the tire 1 according to the example, when the tread surface is equally divided into four regions in the tire width direction, and the two regions on the tire widthwise inner side are each referred to as the center portion CP and the two regions on the tire widthwise outer side are each referred to as the shoulder portion SP, at least two circumferential main grooves 7 continuously extending in the tire circumferential direction are disposed on the tread surface T (two circumferential main grooves are disposed in the illustrated example) and a center land portion 8a defined by two circumferential main grooves 7 is formed in the center portion (one center land portion is formed in the illustrated example). In the illustrated example, two circumferential main grooves 7 are positioned on the tire widthwise inner side of the boundary between the center portion CP and the shoulder portion SP, and the boundary is positioned on the shoulder land portion 8b formed on the tire widthwise outer side of the center land portion 8a.

Further, in the tire 1 according to the example, second center circumferential sipes 9c are disposed in the center region of the three regions of the center land portion 8a equally divided in the tire width direction. More specifically, in the illustrated example, the second center circumferential sipe 9c and has a circumferential sipe portion, positioned in the center region of the center land portion 8a and extending along the tire circumferential direction, and a widthwise sipe portion, extending from one end in the tire circumferential direction of the circumferential sipe portion and opening to the circumferential main groove 7. Further, a plurality of second center circumferential sipes 9c is disposed in a manner that the circumferential sipe portions are lined up in the tire circumferential direction.

In the example, the "second center circumferential sipe 9c" is a sipe which has, in the center region of the center land portion 8a, a circumferential sipe portion that is allowed to be inclined at 0 ° or more and 10 ° or less with respect to the tire circumferential direction, and further, in a case where the sipe has, as illustrated in FIG. 3, a sipe portion other than the circumferential sipe portion (widthwise sipe portion in the illustrated example), the circumferential sipe portion is longer in extending length compared to the other sipe portion.

In the tire 1 according to the example, the second center circumferential sipe 9c is disposed in the center region of the three regions of the center land portion 8a equally divided in the tire width direction, and therefore the compression rigidity of the tread rubber 4 of only the surface of the tread surface T can be reduced. As a result, the effective ground contacting area can be increased and the wet performance can be further improved.

If the second circumferential sipe 9c is opened in the circumferential main groove 7, the water film formed between the tread surface T of the land portion and the road surface when the tire runs on a road surface in a wet state can be more easily removed, and thus the wet performance can be improved.

In the tire 1 according to the example, it is preferable that the depth tc of the second circumferential sipe 9c from the tread surface T is 3 mm or less, and/or that two rows or less of the second circumferential sipes 9c are disposed in the center region of the three regions of the center land portion 8a equally divided in the tire width direction. With this structure, the effect of reducing the circumferential shearing rigidity resulting from the second circumferential sipe can be sufficiently small, and the effect of improving the wet performance due to the increase in the circumferential shearing rigidity can be sufficiently maintained.

As to the second circumferential sipe 9c, the circumferential sipe portion thereof may be disposed in a similar manner or at a similar extending length as the center circumferential sipe which may be disposed on the tire according to the embodiment.

For the tire 1 of the example, the center land portion 8a is preferably provided with small holes 9d. By providing the small holes 9d, the compression rigidity of the rubber can be effectively reduced without reducing the circumferential shearing rigidity, and therefore the effective ground contacting area can be increased.

In the tire 1 according to the example shown in the illustrated example, a center circumferential sipe and a shoulder circumferential sipe are not disposed on the center land portion 8a located on the center portion CP and the shoulder land portion 8b located on the shoulder portion SP. However, it is possible to dispose a center circumferential sipe or a shoulder circumferential sipe that is disposed on the tire according to the embodiment.

For the purpose of reducing the compression rigidity of the tread surface, it is also possible to reduce the compression rigidity of the tread surface by forming a layer with low hardness on the tread surface instead of or in addition to the above mentioned sipe and/or small holes. The layer with low hardness may be formed as a tread surface film by using a soft rubber layer with a lower hardness than the tread rubber on the tire radial inner side. In a case where the tread rubber is formed using different rubbers in the radial direction, the hardness of the rubber layer on the tread surface side may be lower than the hardness of a rubber layer on the tire radial inner side.

Further, instead of or in addition to the sipe and/or small holes, it is also possible to reduce the compression rigidity of the tread surface by forming a certain surface roughness on the tread surface. An example of applicable settings regarding surface roughness is a surface roughness where at least a part of the tread surface has a mean height Rc of profile elements of 1 µm or more and 50 µm or less.

Moreover, instead of or in addition to the sipe and/or small holes, it is also possible to reduce the compression rigidity of the tread surface by forming a foamed rubber on the tread surface. It is possible to form the entire tread rubber with foamed rubber or to form only the rubber layer on the tread surface side with foamed rubber.

In addition, instead of or in addition to the circumferential sipe and/or small holes, it is also possible to reduce the compression rigidity of the tread surface by providing a plurality of minute ribs on the tread surface. The minute ribs may be formed, for example, such that they have an apex width of 5 µm to 2.0 mm, height of 5 µm to 1.0 mm, and intervals between adjacent minute ribs of 5 µm to 1.5 mm. The extending direction of the minute ribs may be any direction.

Meanwhile, the tire size of the pneumatic radial tire for passenger vehicles of the disclosure may be specifically exemplified as: 105/50R16, 115/50R17, 125/55R20, 125/60R18, 125/65R19, 135/45R21, 135/55R20, 135/60R17, 135/60R18, 135/60R19, 135/65R19, 145/45R21, 145/55R20, 145/60R16, 145/60R17, 145/60R18, 145/60R19, 145/65R19, 155/45R18, 155/45R21, 155/55R18, 155/55R19, 155/55R21, 155/60R17, 155/65R13, 155/65R18, 155/70R17, 155/70R19, 165/45R22, 165/55R16, 165/55R18, 165/55R19, 165/55R20, 165/55R21, 165/60R19, 165/65R19, 165/70R18, 175/45R23, 175/55R18, 175/55R19, 175/55R20, 175/55R22, 175/60R18, 175/65R15, 185/45R22, 185/50R16, 185/50R20, 185/55R19, 185/55R20, 185/60R17, 185/60R19, 185/60R20, 195/50R20, 195/55R20, 195/60R19, 195/65R17, 205/50R21, 205/55R16, 205/55R20, 205/60R16, 205/60R18, 215/50R21, 215/60R17, 225/65R17.

In the disclosure, it is preferable for the amount of grooves in the tread to be reduced from the viewpoint of the balance between the wet performance and other performances. Specifically, the groove volume ratio (groove volume V2/tread rubber volume VI) is 20 % or less, and the negative ratio (the ratio of the groove area to the tread surface area) is 20 % or less. Those values are smaller than standard values in a pneumatic radial tire for passenger vehicles of a conventional size.

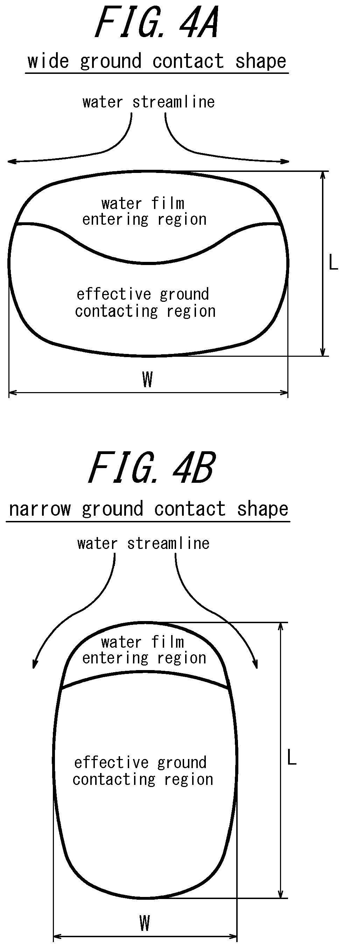

A general idea provides that the groove amount should be increased to improve wet performance. However, the pneumatic radial tire for passenger vehicles satisfying the above relations (1) and/or (2), having a narrow-width, large-diameter size, is reduced in the contact surface width W, and therefore, as illustrated in FIG. 4B by comparison with FIG. 4A, water is readily drained in the tire width direction. This means that the groove amount can be reduced without impairing the wet performance; rather, the land portion rigidity is improved, which leads to improving other performances such as cornering power.

Here, the groove volume ratio is defined as the ratio of V2/V1, in which V1 represents the volume of the tread rubber disposed on the tire widthwise inner side than the both ends in the width direction of a maximum width belt layer having the maximum width in the tire width direction of the belt layers, while being on the tire radial outer side than a reinforcing member (belt layer and belt reinforcement layer) on the tire radial outermost side at the tire widthwise center position, and V2 stands for the total volume of grooves formed in the tread surface.

In the disclosure, in the case where the mounting direction of the tire with respect to the vehicle (vehicle-mounted direction) is designated, difference may be provided to the negative ratio between the tire widthwise half portions on the inside and outside in the vehicle-mounted direction, which boarder at the tire equator plane CL.

In the disclosure, of the rib-like land portions, the shoulder rib-like land portion partitioned by the circumferential main groove on the tire widthwise outermost side and the tread ground contact end E may employ various configurations. For example, in a tire for which the vehicle-mounted direction is designated, the shoulder rib-like land portion may be varied in width in the tire width direction between the vehicle-mounted direction outside and inside. Here, in consideration of the steering stability, the shoulder rib-like land portion on the vehicle-mounted direction outside is preferably larger in width in the tire width direction than the shoulder rib-like land portion on the vehicle-mounted direction inside.

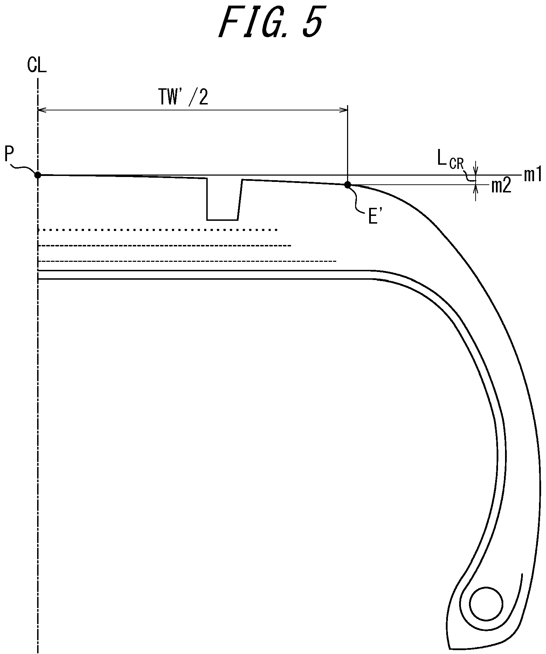

In the case of a pneumatic radial tire for passenger vehicles of the disclosure satisfying the above relations (1) and/or (2), having a narrow-width, large-diameter size, as illustrated in FIG. 5, the distance in the tire radial direction between the straight line m1 and the straight line m2 in a tire widthwise section is defined as a fall height L_{CR} and the tread width of the tire is defined as TW', which preferably satisfies the ratio L_{CR}/TW' of 0.045 or less, the straight line m1 passing through a point P on the tread surface at the tire equator plane CL while being parallel to the tire width direction, the straight line m2 passing through the ground contact end E' while being parallel to the tire width direction. With the ratio L_{CR}/TW' being defined to fall within the aforementioned range, the tire has a crown portion flattened (planarized) to increase the contact area, alleviating an input (pressure) from the road surface to reduce the deflection rate in the tire radial direction, to thereby improve the tire in durability and wear resistance.

As used herein, the "ground contact end E'" refers to the tire widthwise endpoints at the ground contact surface contacting a flat plate of when the tire is assembled to a rim, filled with the maximum air pressure defined for each vehicle to which the tire is to be assembled, vertically placed on a flat plate, and applied with weight corresponding to the maximum load defined for each vehicle to which the tire is to be assembled.

In the disclosure, the tread rubber may be formed of a plurality of different rubber layers laminated in the tire radial direction. Rubbers for use as the aforementioned plurality of rubber layers may be different from one another in such properties as tangent loss, modulus, hardness, glass transition temperature, and material. Further, the ratio of thickness in the tire radial direction of the plurality of rubber layers may vary in the tire width direction. Alternatively, the groove bottom of the circumferential main groove, for example, may alone be formed of a rubber layer different from the surroundings.

In the disclosure, the tread rubber may be formed of a plurality of rubber layers different from one another in the tire width direction. Rubbers for use as the aforementioned plurality of rubber layers may be different from one another in such properties as tangent loss, modulus, hardness, glass transition temperature, and material. Further, the ratio of thickness in the tire radial direction of the plurality of rubber layers may vary in the tire radial direction. Alternatively, rubber layers in a limited region, such as in the vicinity of the circumferential main groove alone, the vicinity of the tread end TE alone, the land portion in the shoulder side alone, or the land portion in the center side alone, may be formed of rubber layers different from the surroundings.

The tire of the disclosure preferably has an inclined belt layer formed of a rubberized layer of cords extending while being inclined with respect to the tire circumferential direction, and in such case, the inclined belt layer may be formed by a single layer. However, in a radial tire for passenger vehicles satisfying the above relations (1) and/or (2), having a narrow-width, large-diameter size, the shape of the contact patch during cornering is easily distorted if the inclined belt layer consists of only a single layer, and therefore it is preferable to adopt an inclined belt layer extending in the direction where the cords respectively intersect between two or more layers. For the pneumatic radial tire for passenger vehicles of the disclosure, a belt structure in which two belt layers form an inclined belt layer is most preferable.

In the disclosure, the width in the tire width direction of the maximum width inclined belt layer having the widest width in the tire width direction preferably has a tire widthwise width of 90 % to 115 % of the tread width TW, and particularly preferably of 100 % to 105 % of the tread width TW.

In the disclosure, metal cords, in particular, steel cords are the most typical examples of belt cords of the inclined belt layer. However, organic fiber cords may also be used. The steel cords may include steel as a main component, and also contain various micro inclusions such as carbon, manganese, silicon, phosphorous, sulfur, copper, and chromium.

In the disclosure, belt cords of the inclined belt layer may use monofilament cords and cords obtained by twisting a plurality of filaments. Various designs may be adopted for the twist structure, which may be different in, for example, sectional structure, twist pitch, twist direction, distance of adjacent filaments. Further, cords obtained by twisting filaments of different materials may also be used, which may employ various twist structures such as single twist, layer twist, and a multi twist without being limited to any particular sectional structure.

In the disclosure, the inclination angle of the belt cords of the inclined belt layer is preferably set to be 10 ° or more with respect to the tire circumferential direction.

In the disclosure, it is preferable that the inclination angle of the belt cords of the inclined belt layers with respect to the tire circumferential direction is a high angle, specifically, 35 ° or more, and particularly, in a range of 55 ° to 85 °.

The reason for this is that, by setting the inclination angle to be 35 ° or more, the rigidity relative to the tire width direction is increased, and the steering stability especially upon cornering is improved. Another reason is that, the shearing deformation of the rubber between layers is reduced and the rolling resistance performance is improved.

The tire of the disclosure may have a circumferential belt formed of one or more layers of circumferential belt layers on the tire radial outer side of the inclined belt layer.

When the inclination angles θ1 and θ2 of the belt cords of the inclined belt layer are 35 ° or more, it is preferable that the circumferential belt has a tire circumferential rigidity per unit width of the center region C including the tire equatorial plane CL higher than the tire circumferential rigidity per unit width of other regions.

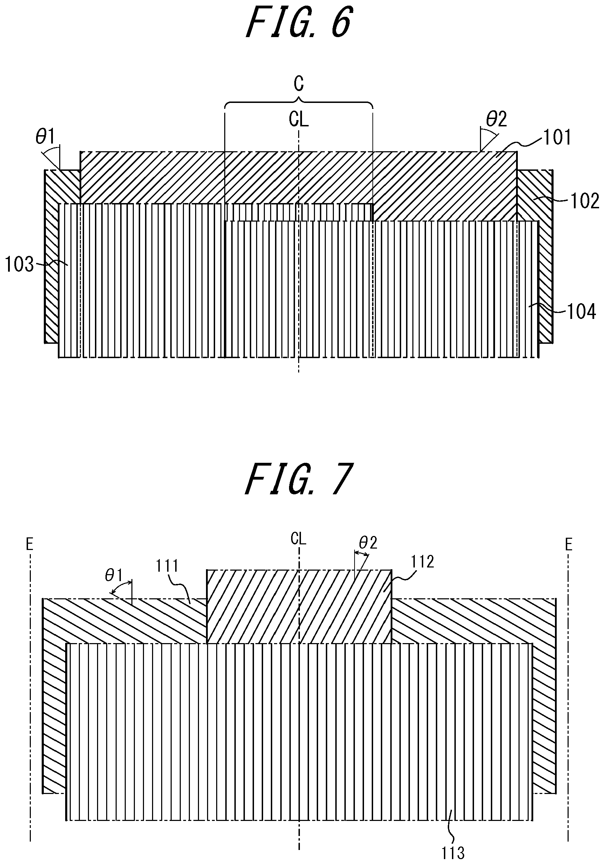

FIG. 6 schematically illustrates one example of the belt structure, in which circumferential belt layers 103, 104 are laminated on the tire radial outer side of inclined belt layers 101, 102, and in the center region C, the circumferential belt layers 103, 104 are overlapped with each other in the tire radial direction.

For example, it is shown in FIG. 6 that, by setting the number of circumferential belt layers in the center region C to be more than other regions, the tire circumferential rigidity per unit width of the center region C can be made higher than the tire circumferential rigidity per unit width of other regions.

In a high frequency region of 400 Hz to 2 kHz, many tires having belt cords of the inclined belt layer inclined at an angle with respect to the tire circumferential direction of 35° or more are deformed such that the entire tread surface greatly vibrates in primary, secondary, tertiary, etc. vibration modes in a sectional direction, and thus a large noise emission is generated. Therefore, locally increasing the tire circumferential rigidity of the central region of the tread in the tire width direction makes the central region of the tread in the tire width direction less prone to expansion in the tire circumferential direction, thereby suppressing expansion of the tread surface in the tire circumferential direction. As a result, noise emission can be reduced.

Further, as mentioned above, in a tire in which the tire circumferential rigidity of the center region that includes the tire equatorial plane CL has been increased, it is preferable that the tread has a land portion that is continuous in the tire circumferential direction in a region including at least the tire equatorial plane CL of the tread surface. When the circumferential main groove is disposed on the tire equatorial plane CL or the vicinity thereof, the rigidity of the tread in the region could decrease, and drastically shorten the ground contact length in the land portion defining the circumferential main groove. Therefore, it is preferable to dispose a land portion (rib-like land portion) that is continuous in the tire circumferential direction over a certain region that includes the tire equatorial plane CL from the viewpoint of improving noise performance without reducing the cornering power.

FIG. 7 schematically illustrates another example of the belt structure, in which a single-layered circumferential belt layer 113 is laminated on the tire radial outer side of two inclined belt layers 111, 112.

In the disclosure, as in the example shown in FIG. 7, when the inclination angle of the belt cords of the inclined belt layer is 35 ° or more, it is preferable that the inclined belt layers include at least two inclined belt layers having different tire widthwise widths, and an inclination angle θ1 with respect to the tire circumferential direction of the cords forming the inclined belt layer having the widest width and an inclination angle θ2 with respect to the tire circumferential direction of the cords forming the inclined belt layer having the narrowest width satisfy relations of 35 ° ≤ θ1 ≤ 85 °, 10 ° ≤ θ2 ≤ 30 °, and θ1 > θ2.

In a high frequency region of 400 Hz to 2 kHz, many tires provided with inclined belt layers having belt cords inclined at an angle with respect to the tire circumferential direction of 35 ° or more are deformed such that the entire tread surface greatly vibrates in primary, secondary, tertiary, etc. vibration modes in a sectional direction, and thus a large noise emission is generated. Therefore, locally increasing the tire circumferential rigidity of the central region of the tread in the tire width direction makes the central region of the tread in the tire width direction less prone to expansion in the tire circumferential direction, thereby suppressing expansion of the tread surface in the tire circumferential direction. As a result, noise emission can be reduced.

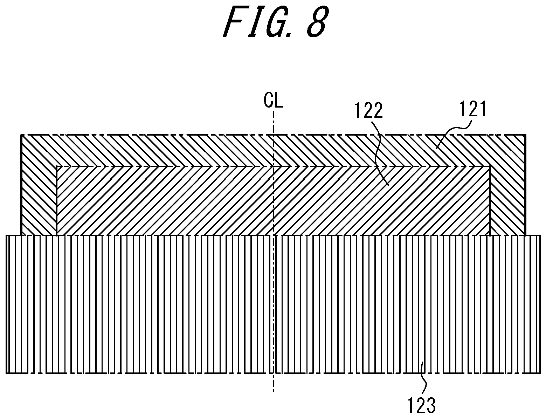

FIG. 8 schematically illustrates another example of the belt structure, in which a single-layered circumferential belt layer 123 is laminated on the tire radial outer side of two inclined belt layers 121, 122.

In the radial tire for passenger vehicles satisfying the above relations (1) and/or (2), having a narrow-width, large-diameter size, the circumferential belt layers are preferably highly rigid, and more specifically, preferably formed of a rubberized layer of cords extending in the tire circumferential direction, which preferably satisfy 1500 ≥ X ≥ 750 where X is defined as X = Y × n × m, Y representing the Young's modulus (GPa) of the cords, n representing the number of the cords (cords/50mm), m representing the number of the circumferential belt layers. The radial tire for passenger vehicles satisfying the above relations (1) and/or (2), having a narrow-width, large-diameter size, is apt to be in a shape which is subjected to local deformation in the tire circumferential direction against input from the road surface upon cornering, such that the contact surface is likely to be in a substantially triangular shape, that is, the contact length in the circumferential direction is largely changed depending on the position in the tire width direction. In contrast, the circumferential belt layers are formed to have high rigidity, so as to improve ring rigidity of the tire, which suppresses deformation in the tire circumferential direction, with the result that deformation in the tire width direction may also be suppressed by the incompressibility of the rubber, making the ground contact shape unlikely to change. Further, the improved ring rigidity promotes eccentric deformation, which simultaneously improves rolling resistance. The effect of improving rolling resistance is particularly improved extensively in the pneumatic radial tire for passenger vehicles satisfying the above relations (1) and/or (2), having a narrow-width, large-diameter size.

Further, when the highly rigid circumferential belt layers are used as described above, belt cords of the inclined belt layers are preferably inclined relative to the tire circumferential direction at a high angle, specifically, of 35 ° or more. The use of the highly rigid circumferential belt layers increases rigidity in the tire circumferential direction, which may inadvertently reduce the contact length in some tires. In light thereof, belt layers inclined at a high angle may be used to reduce the out-of-plane flexural rigidity in the tire circumferential direction to increase the stretching of the rubber in the tire circumferential direction upon tread surface deformation, to thereby suppress reduction in contact length.

Further, in the disclosure, waved cords may be used for the circumferential belt layers, in order to increase breaking strength. The breaking strength may similarly be increased by using high-elongation cords (for example, with the elongation at break of 4.5 % to 5.5 %).

Further, in the disclosure, various materials may be adopted as the circumferential belt layers, as typically exemplified by rayon, nylon, polyethylene naphthalate (PEN), polyethylene terephthalate (PET), aramid, glass fiber, carbon fiber, steel, and the like, with organic fiber cords being particularly preferred in terms of weight reduction.

Here, in the disclosure, the circumferential belt layers may adopt, as the cords thereof, monofilament cords, cords obtained by twisting a plurality of filaments, or hybrid cords obtained by twisting filaments of different materials.

Further, in the disclosure, the number of cords of the circumferential belt layers may be in a range of 20 to 60 per 50 mm, without being limited thereto.

Further, in the disclosure, distributions may be provided in the tire width direction in terms of such properties as rigidity, material, the number of layers, and the density of the cords. For example, the number of the circumferential belt layers may be increased, for example, only at the tire widthwise end. On the other hand, the number of the circumferential belt layers may be increased only in the center side portion.

Further, in the disclosure, the circumferential belt layers may be designed to be wider or narrower than the inclined belt layers. For example, the circumferential belt layers may be designed to have a width in a range of 90 % to 110 % of the width of the widest inclined belt layers largest in the tire widthwise width among the inclined belt layers.

Here, the circumferential belt layers may be configured as spiral layers, which is particularly advantageous in terms of production.

Here, in the disclosure, the circumferential belt layers may optionally be omitted.

In the disclosure, the carcass line may adopt various structures. For example, the carcass maximum width position in the tire radial direction may be closer to either of the bead portion side or the tread side. For example, the carcass maximum width position may be disposed on the tire radial outer side from the bead base portion, within a range of 50 % to 90 % of the tire section height.

Further, in the disclosure, the carcass may also employ various structures. For example, the number of carcasses may be in a range of 20 to 60 per 50 mm, without being limited thereto.

Furthermore, for example, the carcass may have a folded end positioned on the tire radial inner side relative to the tire radial end of a bead filler. Alternatively, the carcass folded end may be positioned on the tire radial outer side relative to the tire radial outer side end of the bead filler or the tire maximum width position, or may be extended, in some cases, to the tire widthwise inner side relative to the tire widthwise end of the inclined belt layer. Further, in the case where the carcass is formed of a plurality of carcass plies, the folded ends of the carcasses may be disposed at different positions in the tire radial direction. Alternatively, the carcass folded part may not be included in the first place; instead, the carcass may be structured to be inserted between a plurality of bead core members, or wound around the bead core.

In the pneumatic radial tire for passenger vehicles satisfying the above relations (1) and/or (2), having a narrow-width, large-diameter size, the tire side portion is preferably reduced in thickness. "The tire side portion may be reduced in thickness" in such a manner that, for example, the bead filler may be configured to have a tire widthwise sectional area S 1 which is one times or more and four times or less of the tire widthwise sectional area S2 of the bead core. Further, the sidewall portion may have a gauge Ts at the tire maximum width portion, and the bead core may have a bead width Tb at the tire radial center position, with the ratio of Ts to Tb (Ts/Tb) falling within a range of 15 % or more and 40 % or less. Further, the sidewall portion may have a gauge Ts at the tire maximum portion, and the carcass may have a carcass cord with a diameter Tc, with the ratio of Ts to Tc (Ts/Tc) being 5 or more and 10 or less.

The gauge Ts is a total thickness of all the members including rubber, the reinforcement member, and the inner liner. Further, when the tire is structured to have the bead core divided into a plurality of small bead cores by the carcass, Tb refers to the distance between the widthwise innermost end and the outermost end portion of all the small bead cores.

In the disclosure, the tire may have the tire maximum width position disposed in a range of 50 % to 90 % of the tire section height, on the tire radial outer side from the bead base portion.

The tire of the disclosure may be structured to include a rim guard.

The tire of the disclosure may be structured without optionally including the bead filler.

In the disclosure, the bead core may employ various structures including a cross-sectional circular shape or cross-sectional polygon shape. Further, a structure of winding the carcass around the bead core or a structure of inserting the carcass between a plurality of bead core members, can be employed.

In the disclosure, the bead portion may further include, for example, a rubber layer and a cord layer for reinforcement purposes. These additional members may be disposed in various positions with respect to the carcass and the bead filler.

In the disclosure, it is preferable to make the inner liner thick from the viewpoint of reducing the vehicle noise of 80 Hz to 100 Hz. Specifically, it is preferable to make the inner liner have a thickness of around 1.5 mm to 2.8 mm which is thicker than a normal inner liner (thickness of around 1.0 mm).

It has been found that, regarding a pneumatic radial tire for passenger vehicles satisfying the above relations (1) and/or (2), having a narrow-width, large-diameter size, the vehicle noise of 80 Hz to 100 Hz tends to deteriorate especially under use of high internal pressure. By making the inner liner thick, the vibration damping performance is enhanced, and the vehicle noise of 80 Hz to 100 Hz is decreased. As to the inner liner, since the loss contributing to rolling resistance is smaller than other members such as the tread, it is possible to minimize the deterioration of rolling resistance and improve noise performance.

In the disclosure, the inner liner may be formed with a rubber layer mainly composed of butyl rubber or with a film layer mainly composed of resin.

In the disclosure, in order to reduce cavity resonance, the tire inner surface may include a porous member arranged thereon or may be treated with an electrostatic flocking process.

The tire of the disclosure may optionally include, on the tire inner surface, a sealant member for preventing air leakage upon a blowout of the tire.

The pneumatic radial tire for passenger vehicles of the disclosure may optionally be configured as a side reinforced run flat tire having a reinforcing rubber having a crescent section disposed on the tire side portion.

In the pneumatic radial tire for passenger vehicles, having a narrow-width, large-diameter size, the side portion may be simplified in structure when configured as a side reinforced run flat tire, to thereby realize both the run flat durability and the fuel efficiency. This is based on the finding that, in the case of a pneumatic radial run flat tire for passenger vehicles satisfying the above relations (1) and/or (2), having a narrow-width, large-diameter size, the tire undergoes, during run-flat traveling, relatively small deformation in the side portion and the tread portion but goes through relatively large deformation from the shoulder portion to the buttress portion. Such deformation is in contrast to that a conventional size tire undergoes relatively large deformation in the side portion.

Such deformation unique to a tire satisfying the above relations (1) and/or (2), having a narrow-width, large-diameter size, allows the tire to have a simplified structure to sufficiently ensure run flat durability and can also improve further the fuel efficiency. Specifically, at least any one of the following conditions (i) to (iii) may be satisfied, to thereby simplify the tire in structure.

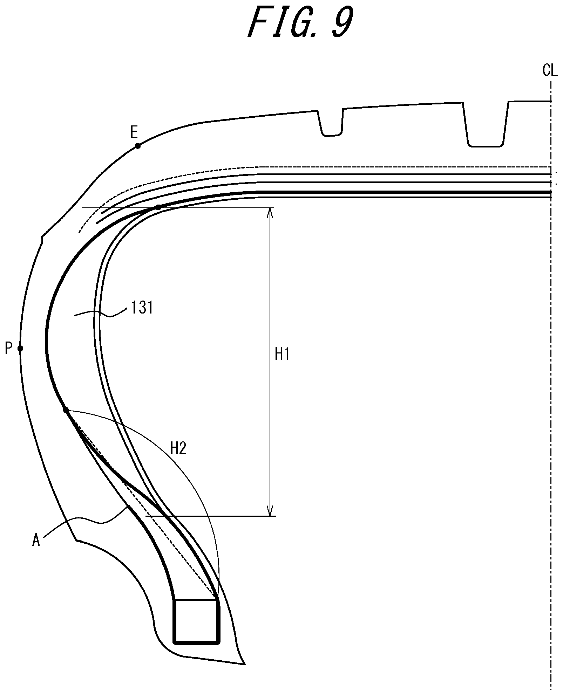

FIG. 9 is a tire widthwise cross sectional view of the tire according to disclosure further example in the case where the tire of the disclosure is a run flat tire.
(i) As illustrated in FIG. 9, the folded end A of the carcass folded part is positioned on the tire radial inner side than the tire maximum width position P. (ii) The tire in a reference state as being assembled to a rim and filled with a predetermined internal pressure with no load applied thereon satisfies a relation of 1.8 ≤ H1/H2 ≤ 3.5, where H1 represents the tire radial maximum length of the side reinforcing rubber 131 in a tire widthwise section and H2 represents the length of a line segment connecting the tire radial outermost side point of the bead filler and the tire radial outermost side point of the bead core. (iii) The tire in a reference state as being assembled to a rim and filled with a predetermined internal pressure with no load applied thereon satisfies a relation of 10 (mm) ≤ (SW/OD) × H1 ≤ 20(mm), where H1 (mm) represents the tire radial maximum length of the side reinforcing rubber 131 in a tire widthwise section.

When the pneumatic radial tire for passenger vehicles satisfying the above relations (1) and/or (2), having a narrow-width, large-diameter size is configured as a side reinforced run flat tire, the circumferential main groove on the tire widthwise outermost side is arranged closer to the tire equator plane CL in the tire width direction, to thereby realize further improvement in run flat durability. This is based on the finding that, in the case of a pneumatic radial run flat tire for passenger vehicles satisfying the above relations (1) and/or (2), having a narrow-width, large-diameter size, the tire undergoes relatively small deformation in the side portion and the tread portion but goes through relatively large deformation from the shoulder portion to the buttress portion during run-flat traveling. Such deformation is in contrast to that a conventional size tire undergoes relatively large deformation in the side portion. As described above, in a narrow-width, large-diameter tire satisfying the above relations (1) and/or (2), which undergoes unique deformation, the circumferential main groove on the tire widthwise outermost side may be arranged closer to the tire equator plane CL, to thereby increase grounding property from the shoulder land portion to the buttress portion in run-flat traveling, which alleviates the contact pressure. As a result, the tire can further be improved in run flat durability.

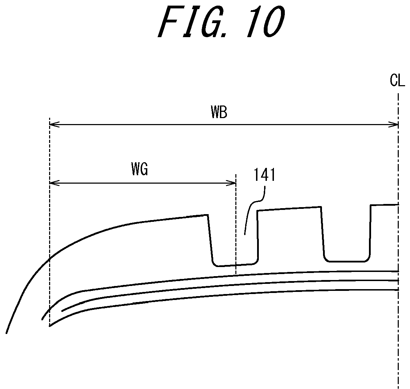

FIG. 10 is a tire widthwise cross sectional view of tire according to another example in the case where the tire of the disclosure is a run flat tire.

Specifically, the tire in a reference state as being assembled to a rim and filled with a predetermined internal pressure with no load applied thereon preferably satisfies a relation of 0.5 ≤ WG/WB ≤ 0.8, where WB represents the half width in the tire width direction of a belt layer maximum in width in the tire width direction of the one or more belt layers in a tire widthwise section and WG represents a tire widthwise distance from the tire widthwise end of a belt layer maximum in width in the tire width direction to the tire widthwise center position of the circumferential main groove 141 in the tire widthwise outermost side of the one or more circumferential main grooves.

The foregoing has explained an embodiment of this disclosure alongside further examples with reference to the drawings. However, the pneumatic radial tire for passenger vehicles of the disclosure is not particularly limited to the aforementioned examples, and appropriate changes may be made without departing from the scope as defined in the appended claims.

### EXAMPLES

The disclosure will be described further in detail by Examples hereinafter without being restricted thereto by any means.

To confirm the effects of the disclosure, tires of Examples 1 to 9 and tires of Comparative Examples 1 to 4 were produced.

The tire of Example 1 is a tire having a tire size of 165/60R19 shown in FIGS. 1 and 2, and has the structure shown in Table 1. Further, in the tire of Example 1, the tread surface has three circumferential main grooves (circumferential main grooves having groove width of 7.5 mm) disposed on the boundary between two center portions and the boundaries between each center portion and each shoulder portion. In the tire of Example 1, a center circumferential sipe is not disposed, and the width of the tread surface in the tire width direction is 125 mm. Further, the disposed shoulder circumferential sipe has a width of 0.7 mm.

The tires of Examples 2 to 8 are the same as the tire of Example 1 except that the position at which the shoulder circumferential sipe is disposed, the total length of the circumferential sipes with respect to the circumferential length of the shoulder portion, and depth ts are changed as shown in Table 1.

The tire of Example 9 is the same as the tire of Example 1 except that two center circumferential sipes that are continuous in the tire circumferential direction having the structures shown in Table 1 are disposed in the tire circumferential direction side by side. Further, the disposed center circumferential sipe has a width of 0.7 mm.

The tires of Examples 10 to 12 are the same as the tire of Example 9 except that the depth tc of the center circumferential sipe, the width w₂ of the center portion between two parallel circumferential sipes are changed as shown in Table 1.

The tire of Comparative Example 1 is a tire having a tire size of 195/65R15, and has the structure shown in Table 2. Further, in the tire of Comparative Example 1, the tread surface has three circumferential main grooves (circumferential main grooves having groove width of 9 mm) disposed on the boundary between two center portions and the boundaries between each center portion and each shoulder portion. Further, in the tire of Comparative Example 1, a shoulder circumferential sipe and a center circumferential sipe are not disposed, and the width of the tread surface in the tire width direction is 145 mm.

The tire of Comparative Example 2 is the same as the tire of Comparative Example 1 except that the dynamic storage modulus E' of the tread rubber is changed as shown in Table 2.

The tires of Comparative Examples 3, 4, 6, and 7 are the same as the tire of Example 1 except that a shoulder circumferential sipe is not disposed, the dynamic storage modulus E' of the tread rubber and the loss tangent tanδ at 60 °C are changed as shown in Table 2.

The tire of Comparative Example 5 is the same as the tire of Example 1 except that a shoulder circumferential sipe is not disposed.

Each of the above sample tires were evaluated by the method described below.

### [Wet performance]

Each of the above sample tires were assembled to a rim under the following conditions, filled with internal pressure, assembled to a vehicle, and then driven on a wet road surface at the speed of 80 km/h. The stopping distance (m) upon full braking after driving in the above state was measured, and the mean deceleration (m/s²) = V²/25.92L during the above was calculated (calculated as a = v²/2L from mv²/2 = maL where a represents mean deceleration, v represents initial speed, m represents mass, and L represents stopping distance. Friction coefficient in a wet condition (wet µ)). The evaluation results are indicated with indices in which the reciprocals of the values of each sample tire are used and the tire described in Comparative Example 1 is 100. The larger index value indicates better wet performance.

Examples 1 to 12, Comparative Examples 3 to 7: Rim size 5.5J19, Internal pressure 300 kPa
Comparative Examples 1 and 2: Rim size 6.5J15, Internal pressure 220 kPa

### [Rolling resistance performance]

Each of the above sample tires were, under the same measuring conditions for wet performance, assembled to a rim, filled with internal pressure, applied with the maximum load defined for each tire, and the rolling resistance was measured under the condition of drum rotational velocity of 100 km/h.

The evaluation results are indicated with indices in which the reciprocals of the values of each sample tire are used and the tire described in Comparative Example 1 is 100. The larger index value indicates better rolling resistance performance.

### [Cornering power]

The cornering power was measured using a flat-belt cornering tester. Specifically, each of the above sample tires were, under the same conditions as the measuring conditions for wet performance, assembled to a rim, filled with internal pressure, attached to a flat-belt cornering tester, and then measurement was carried out. At a belt speed of 100 km/h, the cornering force was measured in a state where the slip angle (SA) between the rolling direction of the tire and the circumferential direction of the drum is 1 °.

The evaluation results are indicated with indices in which the cornering force of Comparative Example 1 is 100. The larger index value indicates better cornering force at the slip angle, i.e. better cornering power at the slip angle.

The dynamic storage modulus E' and loss tangent tanδ were measured using a spectrometer manufactured by Toyo Seiki Seisaku-sho, Ltd., and applying an initial load of 160 g on test pieces of thickness: 2 mm; width: 5 mm; length: 20 mm under the condition of initial strain: 1 %; and frequency: 50 Hz. Here, the dynamic storage modulus E' was measured at 30 °C, and the loss tangent tanδ was measured at 0 °C and 60 °C.

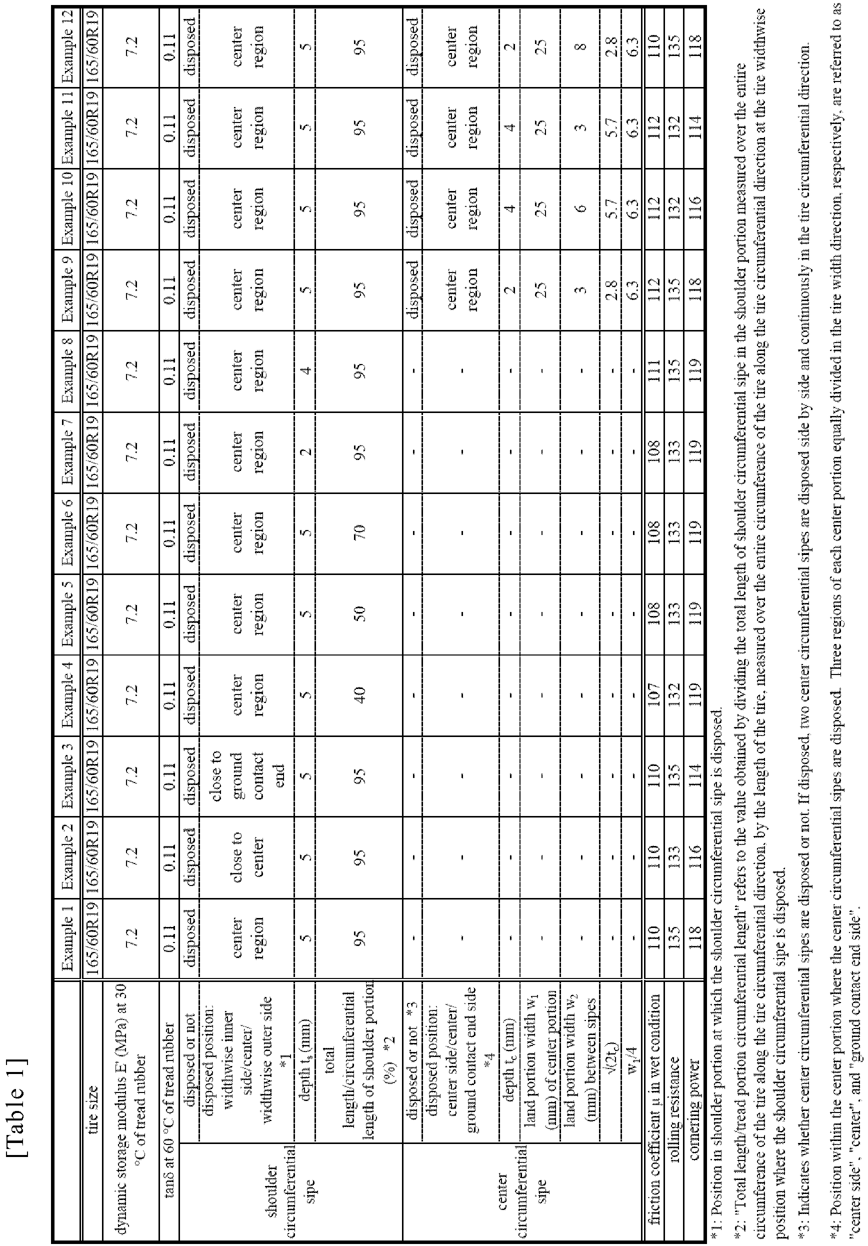

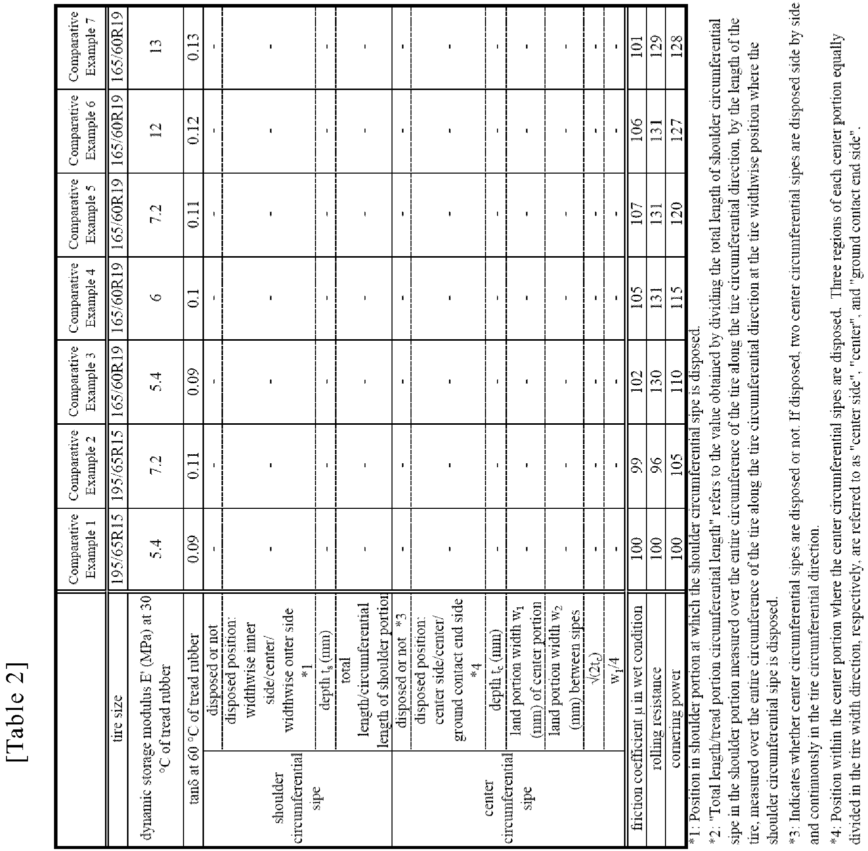

It can be seen from Tables 1 and 2 that the wet performance and rolling resistance performance are more improved in the tires of Examples 1 to 12 compared to the tires of Comparative Examples 1 to 7. It can be seen that, although the tire of Comparative Example 4 has excellent cornering power, Examples 1 to 12 were able to achieve improved wet performance and rolling resistance performance while sufficiently ensuring cornering power.

### INDUSTRIAL APPLICABILITY

The disclosure provides a narrow-width, large-diameter radial tire which is a pneumatic radial tire for passenger vehicles with improved wet performance and rolling resistance performance.

### REFERENCE SIGNS LIST

1: Pneumatic radial tire for passenger vehicles (passenger-vehicle pneumatic radial tire)
2: Bead portion
3: Carcass
4: Tread rubber
5: Tread portion
6: Sidewall portion
7: Circumferential main groove
8: Land portion
8a: Center land portion
8b: Shoulder land portion
9a: Shoulder circumferential sipe
9b: Center circumferential sipe
9c: Second center circumferential sipe
9d: Small hole
101, 102: Inclined belt layer
103, 104: Circumferential belt layer
111, 112: Inclined belt layer
113: Circumferential belt layer
121, 122: Inclined belt layer
123: Circumferential belt layer
131: Side reinforcing rubber
141: Circumferential main groove
T: Tread surface
CP: Center portion
CL: Tire equatorial plane
MCP: Center region (of center portion)
SP: Shoulder portion
MSP: Center region (of shoulder portion)
OSP: Region on tire widthwise outer side (of shoulder portion)
ISP: Region on tire widthwise inner side (of shoulder portion)
E: Ground contact end of tread surface

## Claims

1. A passenger-vehicle pneumatic radial tire (1) comprising:
a carcass (3) consisting of one or more carcass plies of radially arranged cords toroidally extending between a pair of bead portions (2); and
a tread rubber (4) disposed on a tire radial outer side of the carcass (3), wherein
when the tire (1) is assembled to a rim and filled with an internal pressure of 250 kPa or more,
an SW/OD ratio of a sectional width SW to an outer diameter OD (mm) of the tire (1) is 0.26 or less if the tire (1) has the sectional width SW of less than 165 (mm), whereas
the sectional width SW and the outer diameter OD (mm) of the tire (1) satisfy a relation of 2.135 × SW + 282.3 ≤ OD if the tire (1) has the sectional width SW of 165 (mm) or more,
**CHARACTERISED IN THAT**:
the tread rubber (4) has a dynamic storage modulus E' at 30 °C of 6.0 MPa to 12.0 MPa and a loss tangent tanδ at 60 °C of 0.05 to 0.15, and
when a tread surface is equally divided into four regions (CP, SP) in a tire width direction, and two regions on a tire widthwise inner side are each referred to as a center portion (CP) and two regions on a tire widthwise outer side are each referred to as a shoulder portion (SP), a shoulder circumferential sipe (9a) extending in a tire circumferential direction is disposed in the shoulder portion;
wherein the shoulder portion (SP) is equally divided into three regions in the tire width direction, the shoulder circumferential sipe (9a) is disposed only in a center region (MSP) of the three regions of the shoulder portion (SP).

2. The passenger-vehicle pneumatic radial tire (1) according to claim 1, wherein the shoulder circumferential sipe (9a) has a depth from the tread surface of 4 mm or more.

3. The passenger-vehicle pneumatic radial tire (1) according to claim 1 or 2, wherein a total length of the shoulder circumferential sipe (9a) in one of the shoulder portions (SP), measured over an entire circumference of the tire (1) along the tire circumferential direction, is 50 % or more of a length of the tire (1), measured over the entire circumference of the tire (1) along the tire circumferential direction at a tire widthwise position, where the shoulder circumferential sipe (9a) is disposed.

4. The passenger-vehicle pneumatic radial tire (1) according to claim 3, wherein a total length of the shoulder circumferential sipe (9a) in one of the shoulder portions(SP), measured over an entire circumference of the tire (1) along the tire (1) circumferential direction, is 80 % to 100 % of a length of the tire (1), measured over the entire circumference of the tire (1) along the tire circumferential direction at a tire widthwise position, where the shoulder circumferential sipe (9a) is disposed.

5. The passenger-vehicle pneumatic radial tire (1) according to any one of claims 1 to 4, wherein
at least two circumferential main grooves (7; 141) continuously extending in the tire circumferential direction are provided in the tread surface,
a center land portion (8a) defined by the two circumferential main grooves (7; 141) is formed in the center portion (CP), and
when the center land portion (8a) is equally divided into three regions in the tire width direction, two or less rows of center circumferential sipes (9b) with a depth from a tread surface of 3 mm or less are disposed in a center region of the three regions of the center land portion (8a).

6. The passenger-vehicle pneumatic radial tire according to claim 5, wherein
two of the center circumferential sipes (9b) are continuously extending side by side in the tire circumferential direction in the center land portion (8a), and
a width w₁ of the center land portion (8a) in the tire width direction and a width w₂ of a land portion in the tire width direction located between two of the center circumferential sipes satisfy a relation of:
√(2tc) < w₂ < w₁/4.

## Patentansprüche

1. Radialluftreifen (1) für Personenkraftwagen, der Folgendes umfasst:
eine Karkasse (3), die aus einer oder mehreren Karkassenschichten von in Radialrichtung angeordneten Kords besteht, wobei sie sich kreisringförmig zwischen einem Paar von Wulstabschnitten (2) erstreckt, und
einen Laufflächengummi (4), der auf einer in Reifenradialrichtung äußeren Seite der Karkasse (3) angeordnet ist, wobei,
wenn der Reifen (1) an einer Felge montiert und mit einem Innendruck von 250 kPa oder mehr gefüllt ist,
ein Verhältnis SW/OD einer Schnittbreite SW zu einem Außendurchmesser OD (mm) des Reifens (1) 0,26 oder weniger beträgt, falls der Reifen (1) die Schnittbreite SW von weniger als 165 (mm) aufweist, wohingegen
die Schnittbreite SW und der Außendurchmesser OD (mm) des Reifens (1) eine Beziehung von 2,135 × SW + 282,3 ≤ OD erfüllen, falls der Reifen (1) die Schnittbreite SW 165 (mm) oder mehr aufweist,
**dadurch gekennzeichnet, dass**:
der Laufflächengummi (4) einen dynamischen Speichermodul E' bei 30°C von 6,0 MPa bis 12,0 MPa und eine Verlustziffer tanδ bei 60°C von 0,05 bis 0,15 aufweist und,
wenn eine Laufflächenoberfläche in einer Reifenbreitenrichtung gleichmäßig in vier Bereiche (CP, SP) geteilt ist und zwei Bereiche auf einer in Reifenbreitenrichtung inneren Seite jeweils als ein Mittelabschnitt (CP) bezeichnet werden und zwei Bereiche auf einer in Reifenbreitenrichtung äußeren Seite jeweils als ein Schulterabschnitt (SP) bezeichnet werden, eine Schulterumfangslamelle (9a), die sich in einer Reifenumfangsrichtung erstreckt, in dem Schulterabschnitt angeordnet ist;
wobei der Schulterabschnitt (SP) in der Reifenbreitenrichtung gleichmäßig in drei Bereiche geteilt ist, die Schulterumfangslamelle (9a) nur in einem Mittelbereich (MSP) der drei Bereiche des Schulterabschnitts (SP) angeordnet ist.

2. Radialluftreifen (1) für Personenkraftwagen nach Anspruch 1, wobei die Schulterumfangslamelle (9a) eine Tiefe von der Laufflächenoberfläche von 4 mm oder mehr aufweist.

3. Radialluftreifen (1) für Personenkraftwagen nach Anspruch 1 oder 2, wobei eine Gesamtlänge der Schulterumfangslamelle (9a) in einem der Schulterabschnitte (SP), gemessen über einen gesamten Umfang des Reifens (1) entlang der Reifenumfangsrichtung, 50 % oder mehr einer Länge des Reifens (1), gemessen über den gesamten Umfang des Reifens (1) entlang der Reifenumfangsrichtung an einer Reifenbreitenposition, wo die Schulterumfangslamelle (9a) angeordnet ist, beträgt.

4. Radialluftreifen (1) für Personenkraftwagen nach Anspruch 3, wobei eine Gesamtlänge der Schulterumfangslamelle (9a) in einem der Schulterabschnitte (SP), gemessen über einen gesamten Umfang des Reifens (1) entlang der Umfangsrichtung des Reifens (1), 80 % bis 100 % einer Länge des Reifens (1), gemessen über den gesamten Umfang des Reifens (1) entlang der Reifenumfangsrichtung an einer Reifenbreitenposition, wo die Schulterumfangslamelle (9a) angeordnet ist, beträgt.

5. Radialluftreifen (1) für Personenkraftwagen nach einem der Ansprüche 1 bis 4, wobei
wenigstens zwei umlaufende Hauptrillen (7; 141), die sich durchgehend in der Reifenumfangsrichtung erstrecken, in der Laufflächenoberfläche bereitgestellt werden,
ein Mittelstegabschnitt (8a), der durch die zwei umlaufenden Hauptrillen (7; 141) definiert wird, in dem Mittelabschnitt (CP) geformt ist und,
wenn der Mittelstegabschnitt (8a) in der Reifenbreitenrichtung gleichmäßig in drei Bereiche geteilt ist, zwei oder weniger Reihen von Mittelumfangslamellen (9b) mit einer Tiefe von einer Laufflächenoberfläche von 3 mm oder weniger in einem Mittelbereich der drei Bereiche des Mittelstegabschnitts (8a) angeordnet sind.

6. Radialluftreifen (1) für Personenkraftwagen nach Anspruch 5, wobei
sich zwei der Mittelumfangslamellen (9b) durchgehend nebeneinander in der Reifenumfangsrichtung in dem Mittelstegabschnitt (8a) erstrecken und
eine Breite w₁ des Mittelstegabschnitts (8a) in der Reifenbreitenrichtung und eine Breite w₂ eines Stegabschnitts in der Reifenbreitenrichtung, der zwischen zwei der Mittelumfangslamellen angeordnet ist, eine Beziehung von:
√(2tc) < w₂ < w₁/4 erfüllen.

## Revendications

1. Bandage pneumatique radial pour véhicule de tourisme (1), comprenant :
une carcasse (3) constituée par une ou plusieurs nappes de carcasse comprenant des câblés à agencement radial s'étendant toroïdalement entre une paire de parties de talon (2) ; et
une gomme de bande de roulement (4) disposée sur un côté externe, dans la direction radiale du bandage pneumatique, de la carcasse (3) ;
dans lequel :
lorsque le bandage pneumatique (1) est assemblé sur une jante et rempli à une pression interne de 250 kPa ou plus,
un rapport SW/OD entre une largeur de section SW et un diamètre extérieur OD (mm) du bandage pneumatique (1) correspond à 0,26 ou moins lorsque le bandage pneumatique (1) a une largeur de section SW inférieure à 165 (mm) ; tandis que
la largeur de section SW et le diamètre extérieur OD (mm) du bandage pneumatique (1) satisfont une relation de 2,135 x SW + 282,3 ≤ OD lorsque le bandage pneumatique (1) a la largeur de section SW de 165 (mm) ou plus ;
**caractérisé en ce que** :
la gomme de bande de roulement (4) présente un module de stockage dynamique E' à 30°C compris entre 6,0 MPa et 12,0 MPa et une tangente d'angle des pertes tanδ à 60°C comprise entre 0,05 et 0,15 ; et
lorsqu'une surface de bande de roulement est divisée de manière égale en quatre régions (CP, SP) dans une direction de la largeur du bandage pneumatique, et deux régions sur un côté interne dans le sens de la largeur du bandage pneumatique étant chacune référenciée comme partie centrale (CP), et deux régions sur un côté externe dans le sens de la largeur du bandage pneumatique étant chacune référenciée comme partie d'épaulement (SP), une lamelle circonférentielle de l'épaulement (9a) s'étendant dans une direction circonférentielle du bandage pneumatique est disposée dans la partie d'épaulement ;
dans lequel la partie d'épaulement (SP) est divisée de manière égale en trois régions dans la direction de la largeur du bandage pneumatique, la lamelle circonférentielle de l'épaulement (9a) étant disposée uniquement dans une région centrale (MSP) des trois régions de la partie d'épaulement (SP).

2. Bandage pneumatique radial pour véhicule de tourisme (1) selon la revendication 1, dans lequel la lamelle circonférentielle de l'épaulement (9a) a une profondeur, à partir de la surface de la bande de roulement, correspondant à 4 mm ou plus.

3. Bandage pneumatique radial pour véhicule de tourisme (1) selon les revendications 1 ou 2, dans lequel une longueur totale de la lamelle circonférentielle de l'épaulement (9a) dans l'une des parties d'épaulement (SP), mesurée sur l'ensemble d'une circonférence du bandage pneumatique (1), le long de la direction circonférentielle du bandage pneumatique, est de 50% ou plus d'une longueur du bandage pneumatique (1), mesurée sur l'ensemble de la circonférence du bandage pneumatique (1) le long de la direction circonférentielle du bandage pneumatique au niveau d'une position dans le sens de la largeur du bandage pneumatique, où est disposée la lamelle circonférentielle de l'épaulement (9a).

4. Bandage pneumatique radial pour véhicule de tourisme (1) selon la revendication 3, dans lequel une longueur totale de la lamelle circonférentielle de l'épaulement (9a) dans l'une des parties d'épaulement (SP), mesurée sur l'ensemble d'une circonférence du bandage pneumatique (1), le long de la direction circonférentielle du bandage pneumatique (1), représente 80% à 100% d'une longueur du bandage pneumatique (1), mesurée sur l'ensemble de la circonférence du bandage pneumatique (1), le long de la direction circonférentielle du bandage pneumatique, au niveau d'une position dans le sens de la largeur du bandage pneumatique, où est disposée la lamelle circonférentielle de l'épaulement (9a).

5. Bandage pneumatique radial pour véhicule de tourisme (1) selon l'une quelconque des revendications 1 à 4, dans lequel :
au moins deux rainures circonférentielles principales (7 ; 141) s'étendant en continu dans la direction circonférentielle du bandage pneumatique sont formées dans la surface de bande de roulement ;
une partie d'appui centrale (8a) définie par les deux rainures circonférentielles principales (7 ; 141) est formée dans la partie centrale (CP) ; et
lorsque la partie d'appui centrale (8a) est divisée de manière égale en trois régions, dans la direction de la largeur du bandage pneumatique, deux ou moins de rangées de lamelles circonférentielles centrales (9a), ayant une profondeur à partir de la surface de bande de roulement de 3 mm ou moins, sont disposées dans une région centrale des trois régions de la partie d'appui centrale (8a).

6. Bandage pneumatique radial pour véhicule de tourisme selon la revendication 5, dans lequel :
deux des lamelles circonférentielles centrales (9b) s'étendent en continu, côte à côte, dans la direction circonférentielle du bandage pneumatique, dans la partie d'appui centrale (8a) ; et
une largeur w₁ de la partie d'appui centrale (8a), dans la direction de la largeur du bandage pneumatique, et une largeur w₂ d'une partie d'appui, dans la direction de la largeur du bandage pneumatique, agencée entre deux des lamelles circonférentielles centrales satisfont une relation de :
√(2tc) < w₂ < w₁/4.
